# EUROPEAN PATENT SPECIFICATION

(11) **EP 3 078 618 B1**
(45) Date of publication and mention of the grant of the patent: **18.04.2018**
(21) Application number: 15275233.3
(22) Date of filing: 13.11.2015
(51) Int. Cl.: B65G 67/02, B65G 69/24

(54) **GOODS MOVEMENT APPARATUS**
WARENBEWEGUNGSVORRICHTUNG
APPAREIL DE MOUVEMENT DE MARCHANDISES

(30) Priority: 09.04.2015 GB 201506000
(43) Date of publication of application: 12.10.2016
(60) Divisional application: 17152979.5
(73) Proprietor: Adams, William Mark, Retford, Nottinghamshire DN22 8PT (GB)
(72) Inventor: Adams, William Mark, Retford, Nottinghamshire DN22 8PT (GB)
(74) Representative: Wood, Graham

(56) References cited:
- JP-A- H0 912 153
- JP-A- S5 628 134
- JP-A- H07 101 559
- JP-B1- 3 985 971
- JP-U- H0 728 134
- JP-U- S62 103 542
- NL-C- 2 008 410
- US-A- 4 010 571
- US-A- 4 940 379

## Description

The invention to which this application relates is in relation to apparatus for use in the movement of goods. In particular, although not necessary exclusively, the invention is for use in the movement of goods between storage areas, such as a first storage area in the form of a warehouse and a second, movable goods storage area in the form of, for example, a vehicle trailer provided as part of, or in connection with, a vehicle.

The movement of goods across a geographical area is most commonly achieved by vehicles which have a trailer in which goods are stored and moved. The goods may be separate items, such as parcels or the like, or may be grouped together and moved on pallets, trolleys, wheeled cages, or the like. In any case, there is a need for the goods to be unloaded from, and loaded onto, the trailer, most typically at a location such as a warehouse and a loading bay provided as part of the same.

The apparatus of the type to which the application relates includes a lifting platform which is vertically movable with respect a support frame. The goods can be lifted and lowered on the platform with respect to the support frame to allow the platform to be brought to the desired floor height of an adjacent goods storage area, and which floors are often provided at different heights. Once the platform is at the appropriate height, the goods can be moved to and from the adjacent floor which is at the same height. Typically the support frame is located such that one end of the platform is locatable adjacent an edge of a floor of a first of the goods storage areas and the opposing end of the platform is locatable adjacent an edge of a floor of the second of the goods storage areas. EP1775246 discloses an apparatus of this type.

A problem which is experienced with apparatus of this type is how to bridge a gap which exists between the edge of the platform and the edge of the adjacent floor, and, in particular, the floor of the transportable storage area. It should be appreciated that typically the goods are moved through an opening at an end of the transportable goods storage area and that typically the opening is relatively narrow and confined, which is especially the case if there is provided a tail lift assembly and/or door assembly at the opening. When a tail lift assembly is provided a portion of the same can be moved to an extended position outwardly from and externally of the opening and into a horizontal plane so that the portion provides a limited floor space to allow goods to be moved onto the same and then be moved to ground level, typically at a location for delivery of the goods such as to a retail unit. Document US4940379 discloses an apparatus according to the preamble of claim 1 and the provision of a bridge portion across which trolleys can be moved between a warehouse and a vehicle trailer.

The doors which are provided to selectively open and close the opening can take several forms but one possible group is the form in which the door is linearly movable and provided as a shutter or in the form defined in the applicant's copending application number EP2732999 in which there are provided first and second door panels which are linearly movable to allow selective access to portions of the opening into the trailer and typically to allow access to a floor of the trailer at a first height and, by movement of the door panels, to allow access to a floor at a spaced height above the first floor in the trailer.

The provision of this door apparatus at the opening and positioned between the end of the storage area frame and the end of at least the raised floor of the trailer, and the confined size of the opening, means that the bridging of the gap between the respective edges of the floor of the storage area and platform of the lifting apparatus is difficult to achieve and is currently not safely possible in a manner which allows a secure and sufficiently supported access path, especially when one considers the weight of the goods which may be moved across the same and the requirement to allow safe passage of personnel across the same. The The aim of the invention is therefore to provide apparatus and a method which allows the said gap to be bridged safety and repeatedly and a further aim of the invention is to provide a means of moving components to allow the operation of lifts at the opening to another location in the goods storage area whilst ensuring that the lifts or doors operate efficiently. A further aim is to provide the apparatus at the opening of the transportable storage area in a manner which minimises the impact on access through the opening. According to According to the invention there is provided apparatus for the movement of goods, said apparatus including at least one movable goods storage area formed by at least one floor, side walls, end walls and a roof, said goods storage area having an opening through which goods can be moved into and from the goods storage area, said opening selectively closed by a door assembly, and lifting apparatus including a frame and a platform on which goods can be located, said platform movable in relation to the frame and characterised in that an edge of the said platform and an edge of the said floor are spaced apart by a gap and the apparatus includes a support means and one or more bridging portions which are movable to an in-use position supported by said support means to form a bridge across the said gap to allow goods to be moved between the said floor and the platform via said bridge characterised in that the support means and the edge of the floor define opposing side walls of a passage through which at least a portion of the door assembly can pass.

In one embodiment a first bridging portion is movably located on the platform and a second bridging portion is movably located on the said floor

In one embodiment, at least one, but typically both, of the bridging portions are pivotally movable between a storage position and an in use position in which the same form a path between the platform and the floor and allow the passage of goods and/or personnel thereacross.

In one embodiment both of the first and second portions are provided in contact with the support means when they are in the in use position.

In one embodiment at least part of the support means is movable into a position to support at least one of the bridging portions when in the in use position. Alternatively the support means are provided in a fixed position.

Typically the support means are provided as an integral part of the chassis of the goods storage area.

In one embodiment the door assembly is a sliding door assembly such as a shutter door or the door assembly in the applicant's co pending patent application EP2732999. The door of the assembly is movable in a linear direction to allow the opening to be opened or closed. In one embodiment the door may be formed from a number of portions which can be selectively moved to allow selective access to portions of the opening.

In one embodiment the bridging portion connected to the platform is provided for powered movement between the in use and storage positions and the bridging portion connected to the goods storage area is provided to be capable of movement under the influence of the movement and/or position of the door assembly mounted thereon.

Typically the said goods storage area is a vehicle trailer which can be moved into position such that the opening through which the goods are to be moved is positioned adjacent to the said edge of the platform of the lifting apparatus.

In one embodiment the bridging portion attached to the platform is first movable into contact with the support means once the goods storage is in position and can be moved into position prior to the door assembly of the goods storage area being moved to an open position. Typically, once the bridging portion has been moved to contact the support means, so the door assembly can be moved to the open position and the bridging portion of the goods storage area is then free to be moved to the in use position in contact with the support means.

In one embodiment the goods storage area is provided with a tail lift which can be moved to an in use position when the goods storage area is at a location which is remote from the lifting apparatus, said apparatus including a portion which is movable in a linear direction to alter the height of the same, and to allow the same to be deployed between in use and storage positions and wherein the powered movement apparatus is located towards the opposing end of the goods storage from the opening at which the tail lift is mounted.

In one embodiment, the tail lift portion is movable along guide means located at or adjacent to the opening and is connected to the powered movement apparatus via one or more elongate members. In one embodiment the elongate members are chains or cables.

There is provided a transportable good storage apparatus having at least one floor for the location of goods thereon, side walls, end walls and a roof, at least one of said walls having an opening through which goods can be moved into and from the goods storage area, said opening selectively closed by a door assembly and a support means is located at said opening characterised in that opposing side walls of the edge of the floor at the opening and the support means define a passage through which at least a portion of the door assembly can pass.

Specific embodiments of the invention are now described with reference to the accompanying drawings; wherein
Figure 1 illustrates a goods storage area and lifting apparatus in a schematic manner in accordance with one embodiment of the invention;
Figures 2a and b illustrate first and second embodiments of door assemblies of the type which can be used with the current invention;
Figure 3a illustrates a sectional elevation of the support means and bridging portions in accordance with one embodiment of the invention, and Figure 3b illustrates a sectional end elevation along line A-A;
Figures 4a and b illustrate the invention in one embodiment in partial and fully engaged in use positions; and
Figures 5a and b illustrate movement apparatus in accordance with a further embodiment of the invention.

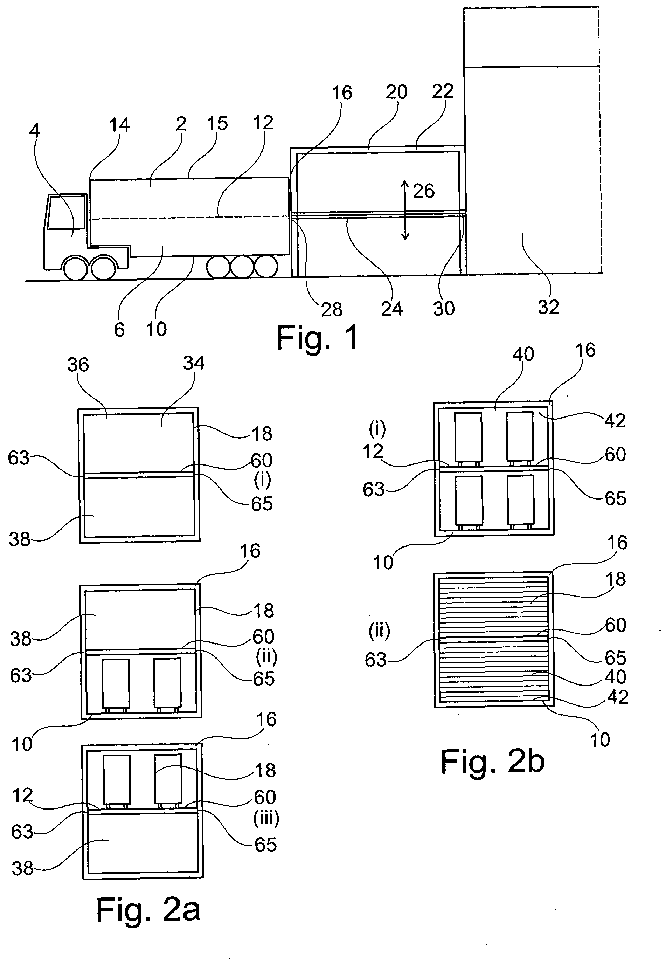

Referring firstly to Figure 1 there is illustrated a movable goods storage area in the form of a vehicle trailer 2 which is located on and movable by a vehicle 4 in a conventional manner. The goods storage area, in this embodiment, is defined by side walls 6,8 a floor 10, a raised floor 12, roof 15, a first end wall 14 and an opposing end 16 in which there is provided an opening 18. The opening, when open, allows the movement of goods into and from the goods storage area 2 and the goods are moved onto and from lifting apparatus 20. The lifting apparatus includes a frame 22 which is provided in a fixed position and on which is mounted a platform 24 and which is movable in the vertical direction indicated by arrow 26 to bring the platform to the height of the required floor 10,12. A first edge 28 of the platform is positioned such that the end 16 of the trailer 2 can be brought adjacent to the same. At the opposite edge 30 of the platform there is typically provided a second goods storage area in the form of a warehouse 32 such that the lifting apparatus allows the movement of goods between the first and second goods storage areas 2 and 32.

The trailer end 16 is provided with a door assembly 34 to allow the selective opening and closing of the opening 18 and two examples of this are provided in Figures 2a and b. In Figure 2a there is provided an assembly in accordance with the applicant's copending application EP2732999. In this case there are provided two door portions 36,38, which are independently movable so that the assembly can be provided in a position to fully close the opening as shown in (i), a first open position as shown in (ii) to allow access to a lower floor 10 of the trailer and goods thereon and a second opened position as shown in (iii) to allow access to the higher floor 12 of the trailer and goods thereon.

A second form of door assembly is shown in Figure 2b in which the door assembly is a shutter door 40 which has a free end 42 which can be moved from the open position adjacent the top of the opening as shown at (i) to the closed position at the floor 10 of the opening as shown at (ii).

In each case it will be appreciated that linear movement of the door assembly 34 is required to be possible and in order for the is to be possible there is required to be space 52 between the edge 44 of the upper floor 12 of the trailer, and the end of the trailer. The gap is necessary to accommodate the rear frame of the trailer 2 at the end 16 and, inwardly of the same, the door assembly 34 and the movement space 52 therefore which, in this embodiment, includes two movement channels 54,56 for movement of the door portions 36,38 of the door assembly 34 shown in Figure 2a.

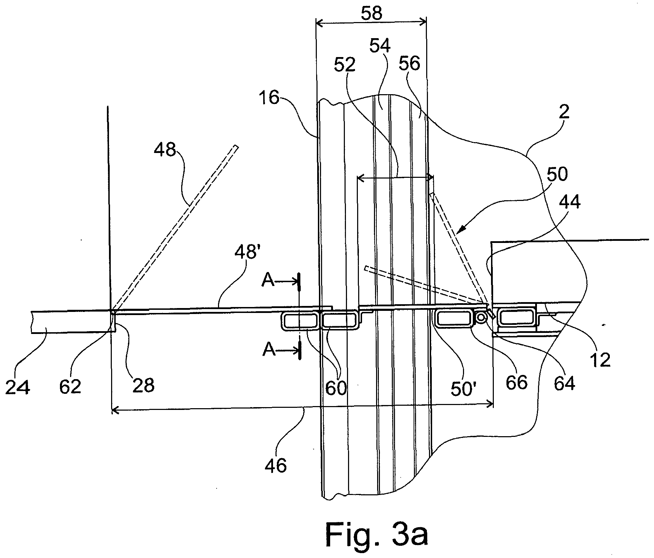

This means, and as shown in Figure 3a, that when the edge 44 of the floor 12 of the trailer 2 is positioned as close to the edge 28 of the platform 24 as is possible there is still a gap 46 between the respective edges. The gap 46 is such that, if not bridged, the movement of goods and/or personnel between the platform 24 and storage area floor 12 would not be possible.

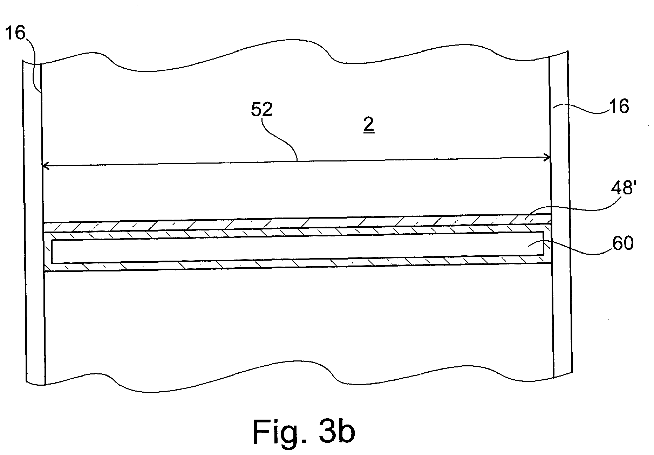

In accordance with the invention, the gap 46 is bridged by the provision of a first bridging portion 48 provided on the platform 24 and a second bridging portion 50, provided on the floor 12 as shown in Figures 3a and b.

The bridging portions 48, 50 are each pivotally movable about respective pivot axes 62, 64 between storage positions shown in broken lines at 48, 50 and in use positions shown at 48', 50', When the portions are in the positions 48', 50' so a goods movement path is provided which allows the goods to be moved between the platform 24 and the floor 12 as indicated by arrow 58.

In order that the bridging portions 48, 50 are supported when in the in-use positions a support means 60 is provided in the form of one or more elongate beams which typically extend across the width of the opening and which are joined at their opposing ends 63,65 as shown in Figures 2a and b to the frame of the trailer 2 at the opening 16 so that they form an integral part thereof. The location of the support means ensures that there is still provided the space 52 between the support means 60 and the edge of the floor 12 such that the door assembly can still be moved when required through the space. Further support members 66 may be provided as part of the trailer frame if required.

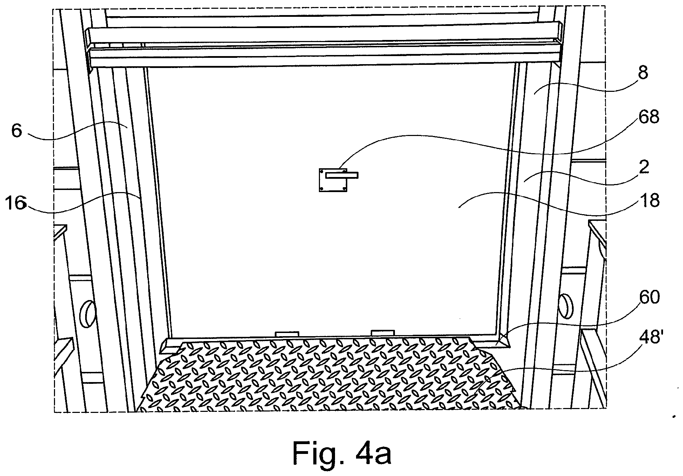

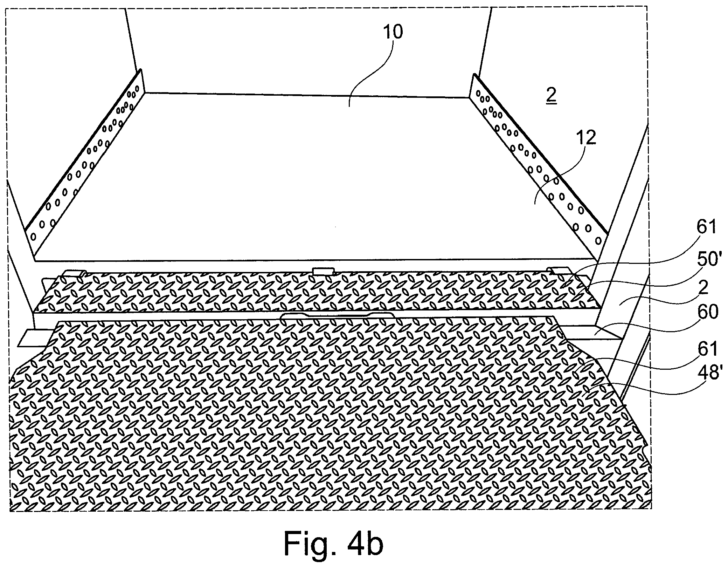

Figures 4a and b illustrate the manner in which the apparatus may be deployed, with the view shown being from the platform 24 looking towards the end 16 of the trailer 2 which has been brought into position for loading/unloading via the platform 24.. Starting from the position in which both the bridging portions 48, 50 are in the storage position shown in broken lines in Figure 3 and with the door assembly 34 of the opening 18 in the closed position shown in Figures 2a(i), it will be seen in Figure 4a how the bridging portion 48 of the platform can be moved down to the in use position 48' as shown to contact with the support means 60 of the trailer 2 with the door assembly 34 closed and hence the opening 18 still closed.

With the bridging portion 48' in position, access can then be gained to the door assembly release handle 68 by an operator when standing on the supported bridge portion 48' of the platform of the lifting apparatus and the door assembly can be moved to an open position to allow access to be gained to the interior of the trailer 2 as shown in Figure 4b. It should be appreciated that only part of the interior of the trailer is shown. The bridging portion 50 of the floor 12 (only the frame of which is shown but which would normally all be covered by boarding 70) can now be accessed and this is lowered down to the in use position 50' as shown in Figure 4b and the bridging portion is also supported by the support means 60 as shown so that a bridge 61 is created by the bridging portions to join the floor 12 and platform 24.

When loading or unloading is finished and the general movement of goods is no longer required, the bridging portion can be moved to the storage position 50, thereby allowing the door assembly 34 to be moved back to the closed position through the space 52 which is then available again.

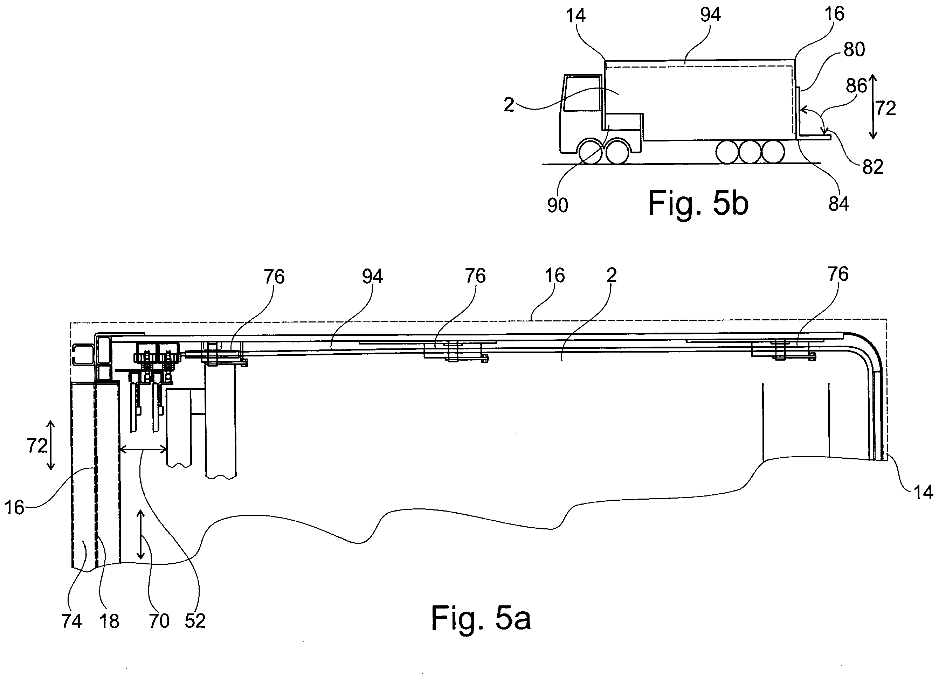

Figure 5 illustrates a side elevation of a storage area trailer 2, the top or roof 15 of which is shown in broken lines. At the end 16 of the same there is again provided an opening 18 with a space 52 in which the door assembly 34 can be moved between open and closed position as indicated by arrow 70. In addition, in this case the trailer 2, at end 16, is also fitted with a tail lift assembly 80 with a portion 82 shown in Figure 5b, provided to be movable between a substantially horizontal in use position as shown and a vertical storage position by pivotal movement about axis 84 and as indicated by arrow 86 in a conventional manner. The height of the portion 82 can also be vertically adjusted as indicated by arrow 72.

When in the use position, the portion 82 can be stood on and/or goods moved onto and from the same and the portion can be moved vertically as indicated by arrow 72 along guide means 74 mounted on the frame of the trailer 2. The movement of the portion 82 is powered and in accordance with the invention, the powered drive apparatus includes a hydraulic ram and hydraulic control system and the components 90 of the same are mounted at the opposing end 14 of the trailer so as not to overly reduce the available space at the opening 18 of the trailer. This is in contrast to conventional apparatus where the powered drive apparatus would also be located at the opening 18 and hence reduce the available space at the opening.

In accordance with the invention, the powered drive apparatus is connected to the portion 82 and guide means 74 via elongate members such as steel cable or chains 94 which pass along the underside of the roof 15 of the trailer and via pulley wheels 76. Typically a first connection is provided towards one side wall 6 at the trailer roof 15 and a second connection is provided towards the opposing side wall 8 of the trailer roof 15. In this way the powered movement of the portion 82 of the tail lift can be achieved with a minimum impact on the space available within the trailer.

## Claims

1. Apparatus for the movement of goods, said apparatus including at least one movable (4) goods storage area (2) formed by at least one floor (10;12), side walls (6,8), end walls (14,16) and a roof (15), said goods storage area having an opening (18) through which goods can be moved into and from the goods storage area, said opening selectively closed by a door assembly (34), and lifting apparatus (20) including a frame (22) and a platform (24) on which goods can be located, said platform (24) movable in relation to the frame (22) and **characterised in that** an edge (28) of the said platform (24) and an edge (44) of the said floor (12) are spaced apart by a gap (46) and the apparatus includes a support means (60) and one or more bridging portions (48,50) which are movable to an in-use position supported by said support means (60)to form a bridge across the said gap to allow goods to be moved between the said floor and the platform via said bridge **characterised in that** the support means (60) and the edge (44) of the floor define opposing side walls of a passage (52) through which at least a portion of the door assembly (34) can pass.

2. Apparatus according to claim 1 **characterised in that** the said door assembly (34) is located intermediate the said floor edge (44) and the support means (60).

3. Apparatus according to claim 1 **characterised in that** the support means (60) is provided as part of the goods storage area (2).

4. Apparatus according to claim 1 **characterised in that** a first bridging portion (48) is movably located on the said platform (24) and a second bridging portion (50) is movably located on the said floor (12).

5. Apparatus according to claim 4 **characterised in that** at least one of the bridging portions (48,50) are pivotally movable between a storage position and the in use position.

6. Apparatus according to any of the preceding claims wherein a bridging portion (48) connected to the platform (24) is provided for powered movement between in use and storage positions and a bridging portion (50) connected to the goods storage area (2) is moved between in-use and storage positions under the influence of the movement and/or position of the door assembly (34).

7. Apparatus according to any of the preceding claims **characterised in that** the one or more bridging portions (48,50) are provided in contact with the support means (60) when they are in the in use position.

8. Apparatus according to claim 1 **characterised in that** at least part of the support means (60) is movable into a position to support at least one of the bridging portions (48,50) when in the in use position.

9. Apparatus according to claim 1 **characterised in that** the support means (60) are provided in a fixed position.

10. Apparatus according to claim 9 **characterised in that** the support means (60) are provided as an integral part of the chassis of the goods storage area (2).

11. Apparatus according to claim 1 **characterised in that** the door assembly (34) has a sliding door (40) which is movable in a linear direction between positions to open and close the opening of the goods storage area.

12. Apparatus according to claim 1 **characterised in that** a bridging portion (48) attached to the platform (24) is first movable into contact with the support means (60) prior to the door assembly (34) of the goods storage area (2) being moved to an open position and once the said bridging portion (48) has been moved to contact the support means (60), the door assembly (34) is moved to the open position and a bridging portion (50) attached to the goods storage area (2) is then moved to the in use position in contact with the support means (60).

13. Apparatus according to claim 1 wherein the goods storage area (2) includes a tail lift mounted at the said opening (18), said taillift including a portion which is movable in a linear direction to alter the height of the same, and to allow the same to be deployed between in use and storage positions and powered drive apparatus for the said movement of the portion is located towards the opposing end (14) of the goods storage area (2) from the opening (18) at which the tail lift is mounted.

14. Apparatus according to claim 13 wherein the said portion is connected to the powered drive apparatus via one or more elongate members which pass along the interior of the goods storage area (2).

## Patentansprüche

1. Vorrichtung zur Bewegung von Waren, wobei die genannte Vorrichtung Folgendes enthält: wenigstens einen bewegbaren (4) Warenlagerbereich (2), der von wenigstens einem Boden (10; 12), Seitenwänden (6, 8), Endwänden (14, 16) und einem Dach (15) gebildet wird, wobei der genannte Warenlagerbereich eine Öffnung (18) hat, durch die Waren in den und aus dem Warenlagerbereich bewegt werden können, wobei die genannte Öffnung selektiv durch eine Türanordnung (34) verschlossen wird, und eine Hebevorrichtung (20) mit einem Rahmen (22) und einer Plattform (24), auf der Waren positioniert werden können, wobei die genannte Plattform (24) im Verhältnis zum Rahmen (22) bewegbar ist, und **dadurch gekennzeichnet, dass** ein Rand (28) der genannten Plattform (24) und ein Rand (44) des genannten Bodens (12) durch einen Zwischenraum (46) voneinander beabstandet sind und die Vorrichtung ein Trägermittel (60) und einen oder mehr Brückenteile (48, 50) enthält, die in eine Gebrauchsstellung bewegbar sind, die von dem genannten Trägermittel (60) gestützt wird, um eine Brücke über den genannten Zwischenraum zu bilden, damit Waren über die genannte Brücke zwischen dem genannten Boden und der Plattform bewegt werden können, **dadurch gekennzeichnet, dass** das Trägermittel (60) und der Rand (44) des Bodens einander gegenüberliegende Seitenwände eines Durchgangs (52) definieren, durch den wenigstens ein Teil der Türanordnung (34) hindurchgeführt werden kann.

2. Vorrichtung nach Anspruch 1, **dadurch gekennzeichnet, dass** die genannte Türanordnung (34) sich zwischen dem genannten Bodenrand (44) und dem Trägermittel (60) befindet.

3. Vorrichtung nach Anspruch 1, **dadurch gekennzeichnet, dass** das Trägermittel (60) als Teil des Warenlagerbereichs (2) bereitgestellt ist.

4. Vorrichtung nach Anspruch 1, **dadurch gekennzeichnet, dass** ein erster Brückenteil (48) sich bewegbar an der genannten Plattform (24) befindet und ein zweiter Brückenteil (50) sich bewegbar an dem genannten Boden (12) befindet.

5. Vorrichtung nach Anspruch 4, **dadurch gekennzeichnet, dass** wenigstens einer der Brückenteile (48, 50) schwenkbar zwischen einer Aufbewahrungsstellung und der Gebrauchsstellung bewegbar ist.

6. Vorrichtung nach einem der vorhergehenden Ansprüche, wobei ein mit der Plattform (24) verbundener Brückenteil (48) zur kraftbetriebenen Bewegung zwischen einer Gebrauchs- und einer Aufbewahrungsstellung bereitgestellt ist und ein mit dem Warenlagerbereich (2) verbundener Brückenteil (50) unter dem Einfluss der Bewegung und/oder Stellung der Türanordnung (34) zwischen einer Gebrauchs- und einer Aufbewahrungsstellung bewegt wird.

7. Vorrichtung nach einem der vorhergehenden Ansprüche, **dadurch gekennzeichnet, dass** der eine oder die mehr Brückenteile (48, 50) mit dem Trägermittel (60) in Kontakt bereitgestellt sind, wenn sie in der Gebrauchsstellung sind.

8. Vorrichtung nach Anspruch 1, **dadurch gekennzeichnet, dass** wenigstens Teil des Trägermittels (60) in eine Stellung zum Stützen von wenigstens einem der Brückenteile (48, 50), wenn in der Gebrauchsstellung, bewegbar ist.

9. Vorrichtung nach Anspruch 1, **dadurch gekennzeichnet, dass** die Trägermittel (60) in einer festen Stellung bereitgestellt sind.

10. Vorrichtung nach Anspruch 9, **dadurch gekennzeichnet, dass** die Trägermittel (60) als integrierter Teil des Fahrgestells des Warenlagerbereichs (2) bereitgestellt sind.

11. Vorrichtung nach Anspruch 1, **dadurch gekennzeichnet, dass** die Türanordnung (34) eine Schiebetür (40) hat, die in einer linearen Richtung zwischen Stellungen zum Öffnen und Schließen der Öffnung des Warenlagerbereichs bewegbar ist.

12. Vorrichtung nach Anspruch 1, **dadurch gekennzeichnet, dass** ein an der Plattform (24) angebrachter Brückenteil (48) zuerst mit dem Trägermittel (60) in Kontakt bewegbar ist, bevor die Türanordnung (34) des Warenlagerbereichs (2) in eine offene Stellung bewegt wird, und die Türanordnung (34), sobald der genannte Brückenteil (48) bewegt worden ist, um mit dem Trägermittel (60) in Kontakt zu sein, auf die offene Stellung bewegt wird und ein an dem Warenlagerbereich (2) angebrachter Brückenteil (50) dann in die Gebrauchsstellung in Kontakt mit dem Trägermittel (60) bewegt wird.

13. Vorrichtung nach Anspruch 1, wobei der Warenlagerbereich (2) einen an der genannten Öffnung (18) montierten Hecklift enthält, wobei der genannte Hecklift einen Teil enthält, der in einer linearen Richtung bewegbar ist, um die Höhe desselben zu verändern und um zuzulassen, dass derselbe zwischen der Gebrauchs- und der Aufbewahrungsstellung eingesetzt wird, und eine kraftbetriebene Antriebsvorrichtung für die genannte Bewegung des Teils sich zu dem Ende (14) des Warenlagerbereichs (2) hin befindet, das der Öffnung (18), an der der Hecklift montiert ist, gegenüberliegt.

14. Vorrichtung nach Anspruch 13, wobei der genannte Teil über ein oder mehr längliche Elemente, die am Inneren des Warenlagerbereichs (2) entlangverlaufen, mit der kraftbetriebenen Antriebsvorrichtung verbunden ist.

## Revendications

1. Appareil pour le mouvement de marchandises, ledit appareil incluant au moins une zone de stockage de marchandises (2) mobile (4) formée par au moins un plancher (10 ; 12), des parois latérales (6, 8), des parois d'extrémité (14, 16) et un toit (15), ladite zone de stockage de marchandises possédant une ouverture (18) à travers laquelle des marchandises peuvent être placées dans la zone de stockage de marchandises et peuvent en être retirées, ladite ouverture étant fermée sélectivement par un ensemble porte (34), et un appareil de levage (20) incluant un cadre (22) et une plate-forme (24) sur laquelle des marchandises peuvent être mises, ladite plate-forme (24) étant mobile en relation au cadre (22), et **caractérisé en ce qu'**un bord (28) de ladite plate-forme (24) et un bord (44) dudit plancher (12) sont espacés par un intervalle (46) et l'appareil inclut un moyen de support (60) et une ou plusieurs portions de pontage (48, 50) qui sont aptes à être déplacées jusqu'à une position en utilisation soutenues par ledit moyen de support (60) afin de former une passerelle à travers ledit intervalle pour permettre à des marchandises d'être déplacées entre ledit plancher et la plate-forme via ladite passerelle, **caractérisé en ce que** le moyen de support (60) et le bord (44) du plancher définissent des parois latérales opposées d'un passage (52) à travers lequel au moins une portion de l'ensemble porte (34) peut passer.

2. Appareil selon la revendication 1, **caractérisé en ce que** ledit ensemble porte (34) est localisé entre ledit bord de plancher (44) et le moyen de support (60).

3. Appareil selon la revendication 1, **caractérisé en ce que** le moyen de support (60) est prévu en tant que partie de la zone de stockage de marchandises (2).

4. Appareil selon la revendication 1, **caractérisé en ce qu'**une première portion de pontage (48) est localisée de manière mobile sur ladite plate-forme (24), et qu'une deuxième portion de pontage (50) est localisée de manière mobile sur ledit plancher (12).

5. Appareil selon la revendication 4, **caractérisé en ce qu'**au moins une des portions de pontage (48, 50) est mobile de manière pivotante entre une position de stockage et la position en utilisation.

6. Appareil selon l'une quelconque des revendications précédentes, une portion de pontage (48) raccordée à la plate-forme (24) étant prévue pour un mouvement motorisé entre des positions en utilisation et de stockage, et une portion de pontage (50) raccordée à la zone de stockage de marchandises (2) étant déplacée entre des positions en utilisation et de stockage sous l'influence du mouvement et/ou de la position de l'ensemble porte (34).

7. Appareil selon l'une quelconque des revendications précédentes, **caractérisé en ce que** lesdites une ou plusieurs portions de pontage (48, 50) sont prévues pour être au contact du moyen de support (60) lorsqu'elles se trouvent dans la position en utilisation.

8. Appareil selon la revendication 1, **caractérisé en ce qu'**au moins une partie du moyen de support (60) est apte à être déplacée jusqu'à une position pour soutenir au moins une des portions de pontage (48, 50) lorsqu'elle se trouve dans la position en utilisation.

9. Appareil selon la revendication 1, **caractérisé en ce que** le moyen de support (60) est prévu dans une position fixe.

10. Appareil selon la revendication 9, **caractérisé en ce que** le moyen de support (60) est prévu comme étant une partie intégrale du châssis de la zone de stockage de marchandises (2).

11. Appareil selon la revendication 1, **caractérisé en ce que** l'ensemble porte (34) a une porte coulissante (40) qui est mobile suivant un sens linéaire entre des positions afin d'ouvrir et de fermer l'ouverture de la zone de stockage de marchandises.

12. Appareil selon la revendication 1, **caractérisé en ce qu'**une portion de pontage (48) attachée à la plate-forme (24) est d'abord apte à être déplacée pour être au contact du moyen de support (60) avant que l'ensemble porte (34) de la zone de stockage de marchandises (2) ne soit déplacé jusqu'à une position ouverte, et une fois que ladite portion de pontage (48) a été déplacée pour être au contact du moyen de support (60), l'ensemble porte (34) est déplacé jusqu'à la position ouverte, et une portion de pontage (50) attachée à la zone de stockage de marchandises (2) est alors déplacée jusqu'à la position en utilisation au contact du moyen de support (60).

13. Appareil selon la revendication 1, la zone de stockage de marchandises (2) incluant un hayon de levage monté au niveau de ladite ouverture (18), ledit hayon de levage incluant une portion qui est mobile suivant un sens linéaire afin de modifier la hauteur de celui-ci, et pour permettre à celui-ci d'être déployé entre des positions en utilisation et de stockage, et un appareil à entraînement motorisé pour ledit mouvement de la portion étant localisé vers l'extrémité opposée (14) de la zone de stockage de marchandises (2) à partir de l'ouverture (18) au niveau de laquelle le hayon de levage est monté.

14. Appareil selon la revendication 13, ladite portion étant raccordée à l'appareil à entraînement motorisé via un ou plusieurs éléments allongés qui passent le long de l'espace intérieur de la zone de stockage de marchandises (2).
